# EUROPÄISCHE PATENTANMELDUNG

(11) **EP 3 594 256 A1**
(43) Veröffentlichungstag der Anmeldung: **15.01.2020**
(21) Anmeldenummer: 18182568.8
(22) Anmeldetag: 10.07.2018
(51) Int. Cl.: C08G 18/48, C08G 18/76, C08G 18/12, C08G 18/20, C08G 18/44, C08G 101/00

(54) **REAKTIONSSYSTEM FÜR EINEN 1-K POLYURETHAN-HARTSCHAUMSTOFF**

(71) Anmelder: Covestro Deutschland AG, 51373 Leverkusen (DE)
(72) Erfinder: Die Erfindernennung liegt noch nicht vor
(74) Vertreter: Levpat

(57) **Zusammenfassung**

Die vorliegende Erfindung betrifft ein Einkomponenten-Reaktionssystem (auch 1K-Reaktionssystem genannt) zur Herstellung von Polyurethan-Hartschaumstoffen (auch PUR-Hartschaumstoffe genannt) mit verbesserter Dimensionsstabilität, sowie Verfahren zu dessen Herstellung und deren Verwendung. Die Erfindung betrifft auch die aus dem erfindungsgemäßen Einkomponenten-Reaktionssystem hergestellten Polyurethan-Hartschaumstoffe.

## Beschreibung

Die vorliegende Erfindung betrifft ein Einkomponenten-Reaktionssystem (auch 1K-Reaktionssystem genannt) enthaltend Polyethercarbonatpolyol zur Herstellung von Polyurethan-Hartschaumstoffen (auch PUR-Hartschaumstoffe genannt), sowie Verfahren zu dessen Herstellung und deren Verwendung. Die Erfindung betrifft auch die aus dem erfindungsgemäßen Einkomponenten-Reaktionssystem hergestellten Polyurethan-Hartschaumstoffe.

Im Rahmen einer umweltfreundlichen Ausrichtung von Produktionsprozessen ist es generell wünschenswert, CO₂-basierte Ausgangsstoffe, beispielsweise in Form von Polyethercarbonatpolyolen, in relativ großen Mengen einzusetzen. Die Herstellung von Polyethercarbonatpolyolen durch katalytische Umsetzung von Alkylenoxiden (Epoxiden) und Kohlendioxid in Anwesenheit von H-funktionellen Starterverbindungen ("Starter") wird seit mehr als 40 Jahren intensiv untersucht (z. B. Inoue et al, Copolymerization of Carbon Dioxide and Epoxide with Organometallic Compounds; Die Makromolekulare Chemie 130, 210-220, 1969). Diese Reaktion ist in Schema (I) schematisch dargestellt, wobei R für einen organischen Rest wie Alkyl, Alkylaryl oder Aryl steht, der jeweils auch Heteroatome wie beispielsweise O, S, Si usw. enthalten kann, und wobei e, f und g für eine ganzzahlige Zahl stehen, und wobei das hier im Schema (I) gezeigte Produkt für das Polyethercarbonatpolyol lediglich so verstanden werden soll, dass sich Blöcke mit der gezeigten Struktur im erhaltenen Polyethercarbonatpolyol prinzipiell wiederfinden können, die Reihenfolge, Anzahl und Länge der Blöcke sowie die OH-Funktionalität des Starters aber variieren kann und nicht auf das in Schema (I) gezeigte Polyethercarbonatpolyol beschränkt ist. Diese Reaktion (siehe Schema (I)) ist ökologisch sehr vorteilhaft, da diese Reaktion die Umsetzung eines Treibhausgases wie CO₂ zu einem Polymer darstellt. Als weiteres Produkt, eigentlich Nebenprodukt, entsteht das in Schema (I) gezeigte cyclische Carbonat (beispielsweise für R = CH₃ Propylencarbonat, im Folgenden auch als cPC bezeichnet, oder für R = H Ethylencarbonat, im Folgenden auch als cEC bezeichnet).

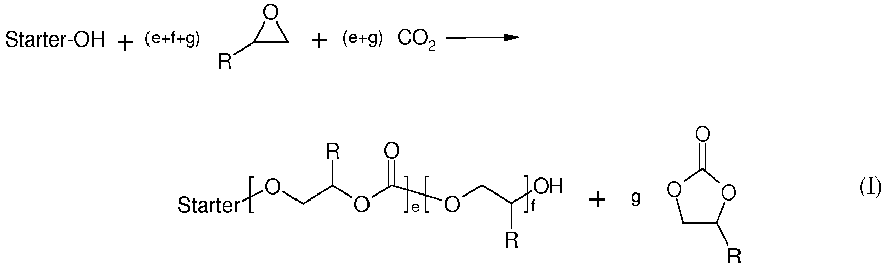

Verfahren zur Herstellung von Polyurethanschaumstoffen auf Basis von Polyethercarbonatpolyolen und Isocyanaten sind bekannt (z.B. WO 2012/130760 A1, EP-A 0 222 453).

Die Herstellung von Polyurethan-Schaumstoffen aus Einwegdruckbehältern ist aus dem Stand der Technik ebenfalls bekannt. Dabei wird ein isocyanatgruppenhaltiges Präpolymer durch Reaktion einer Polyolkomponente unter Zusatz von Schaumstabilisatoren und Katalysatoren sowie gegebenenfalls von Weichmachern, Flammschutzmitteln, Vernetzern und weiteren Zusatzstoffen mit organischen Di- und/oder Polyisocyanaten hergestellt. Diese Umsetzung erfolgt normalerweise in Gegenwart von Treibmitteln in einem Druckbehälter. Nach Abschluss der Präpolymerbildung kann der Polyurethan-Schaumstoff dann über ein Ventil dosiert ausgetragen werden. Dabei besitzt der Polyurethan-Schaumstoff zuerst eine sahnige Konsistenz und härtet dann anschließend durch Einwirken der Umgebungsfeuchtigkeit, z.B. aus der Luft unter Volumenvergrößerung, aus. Bei solchen Schaumstoffen spricht man daher von Einkomponenten-Schaumstoffen (1K-Schaumstoffe).

Um die gewünschten Endeigenschaften des Schaumstoffes wie z.B. Härte oder Zellbeschaffenheit zu erhalten, wird mit einem deutlichen Überschuss des Isocyanats gegenüber der Polyolkomponente gearbeitet. Auf diese Weise wird die sogenannte Vorverlängerung und damit die Molekulargewichtsverteilung des Präpolymers reguliert. Je geringer die Vorverlängerung des Präpolymers, desto enger ist die Molekulargewichtsverteilung und desto präziser einstellbar sind die Endeigenschaften des ausgehärteten PUR-Schaumstoffes.

Ein großes Anwendungsgebiet für 1K-Schaumstoffe ist die Bauindustrie, bei der PUR-Hartschaumstoffe mit einer guten Dimensionsstabilität (geringe Quellung bzw. Schwindung) erwünscht sind. PUR-Hartschaumstoffe mit geringer Quellung bzw. Schwindung zeichnen sich dadurch aus, dass beschäumte Bauteile in einem weiteren Arbeitsschritt weniger nachbearbeitet werden müssen (durch z.B. Zuschneiden). Ebenso besteht die Gefahr, dass sich beschäumte Bauteile durch zu hohem Quellverhalten bzw. Schwindung des Schaumstoffes in ihrer Geometrie verändern. Zudem lassen sich Schaumstoffe mit geringer Quellung bzw. Schwindung besser dosieren.

Die WO 2011/138274 A1 offenbart Präpolymere, welche durch Umsetzung von Polyisocyanaten und Polyethercarbonatdiolen erhalten werden. Diese Präpolymer können eingesetzt werden um z.B. einkomponentige Beschichtungen mit verbesserter Härte herzustellen. Es wird in der WO 2011/138274 A1 jedoch kein Einkomponenten-Reaktionssystem offenbart, welches zu Polyurethan-Hartschaumstoffen führt und somit auch kein Effekt auf die Dimensionsstabilität von Polyurethan-Hartschaumstoffen aus Einkomponenten-Reaktionssystemen gezeigt.

Ausgehend vom Stand der Technik bestand die Aufgabe der vorliegenden Erfindung darin, eine 1K-Polyurethan-Formulierung zur Verfügung zu stellen, die gut austragbare und gleichzeitig nach dem Aushärten feste Polyurethan-Hartschaumstoffe liefert, welche eine gute Dimensionsstabilität aufweisen.

Überraschend wurde diese Aufgabe gelöst durch das erfindungsgemäße Einkomponenten-Reaktionssystem zur Herstellung von Polyurethan-Hartschaumstoffen, umfassend die folgenden Bestandteile:
A) mindestens eine organische Polyisocyanatkomponente,
B) mindestens eine isocyanatreaktive Komponente, deren isocyanatreaktiven funktionellen Gruppen ausschließlich solche mit wenigstens einem Zerewitinoff-reaktiven Wasserstoffatom sind,
C) mindestens einen Schaumstabilisator,
D) mindestens einen Katalysator, der geeignet ist, die Reaktion der Polyisocyanatkomponente A) mit der isocyanatreaktiven Komponente B) zu katalysieren,
E) mindestens ein physikalisches Treibmittel mit einem Siedepunkt von weniger als 0 °C und gegebenenfalls Co-Treibmittel, sowie
F) gegebenenfalls Hilfs- und Zusatzstoffe,
dadurch gekennzeichnet, dass
das Einkomponenten-Reaktionssystem mindestens 10 Gew.-%, bezogen auf die Summe der Gewichtsanteile von A) bis F) = 100 Gew.-%, eines Polyethercarbonatpolyols enthält.

Die Erfindung betrifft ferner ein Verfahren zur Herstellung eines Einkomponenten-Reaktionssystems, ein Verfahren zur Herstellung von Polyurethan-Hartschaumstoffen aus einem Einkomponenten-Reaktionssystem, einen Polyurethan-Hartschaumstoff, erhältlich aus einem Einkomponenten-Reaktionssystem, die Verwendung eines Einkomponenten-Reaktionssystems als Einkomponenten-Montageschaumstoff (auch 1K-Montageschaumstoff genannt), sowie einen Druckbehälter enthaltend ein Einkomponenten-Reaktionssystem und ein Treibmittel.

Mit "Funktionalität Fₙ" eines Polyols / einer Polyolmischung ist im Sinne dieser Anmeldung die zahlengemittelte Funktionalität der Polyolmischung aus Polyol 1 ... Polyol i gemeint, berechnet mittels Fₙ = Σ xᵢ Fᵢ mit xᵢ = Molenbruch und Fᵢ Starterfunktionalität des Polyols i.

Das Äquivalentgewicht gibt das Verhältnis des zahlenmittleren Molekulargewichts und der Funktionalität der isocyanatreaktiven Komponente an. Die Angaben des Äquivalentgewichts für Mischungen berechnen sich aus den Äquivalentgewichten der einzelnen Komponenten in ihren jeweiligen molaren Anteilen und beziehen sich auf das zahlenmittlere Äquivalentgewicht der Mischung.

Mit "Molekulargewicht" oder "Molmasse" ist im Sinne dieser Anmeldung das zahlengewichtete mittlere Molekulargewicht gemeint.

Die Kennzahl (Index) gibt das prozentuale Verhältnis der tatsächlich eingesetzten IsocyanatMenge zur stöchiometrischen, d.h. für die Umsetzung der OH-Äquivalente berechneten Menge an Isocyanat-Gruppen (NCO)-Menge an.

Als organische Polyisocyanatkomponente A) werden in einem Anteil von 90 bis 100 Gew.-%, bevorzugt von 95 bis 100 Gew.-%, besonders bevorzugt von 98 bis 100 Gew.-%, bezogen auf das Gesamtgewicht von A), aromatische Polyisocyanate, wie beispielsweise 2,4- oder 2,6-Toluylendiisocyanat (TDI), 1,5-Naphthylendiisocyanat, 2,2'- oder 2,4'- oder 4,4'-Diphenylmethandiisocyanat (monomeres MDI) oder höhere Homologe (polymeres MDI), 1,3- oder 1,4-Bis-(2-isocyanato-prop-2-yl)-benzol (TMXDI), 1,3-Bis-(isocyanatomethyl)benzol (XDI) oder weitere aromatische organische Polyisocyanate der aus der Polyurethanchemie an sich bekannten Art einzeln oder als Gemische eingesetzt. Die organische Polyisocyanatkomponente A) enthält bevorzugt mindestens 80 Gew.-%, besonders bevorzugt mindestens 85 Gew.-% und insbesondere bevorzugt mindestens 95 Gew.-% , bezogen auf das Gesamtgewicht von A), monomeres und/oder polymeres MDI. Daneben kann die organische Polyisocyanatkomponente A) in geringen Anteilen von 0 bis 10 Gew.-%, bevorzugt von 0 bis 5 Gew.-%, besonders bevorzugt von 0 bis 2 Gew.-%, bezogen auf das Gesamtgewicht von A), nicht-aromatische organische Isocyanate enthalten. In einer besonders bevorzugten Ausführungsform enthält die organische Polyisocyanatkomponente A) nur monomeres und/oder polymeres MDI, bzw. enthält höchstens produktionsbedingt technisch unvermeidbare Spuren an weiteren Isocyanaten. Der Anteil der organischen Polyisocyanatkomponente A) an dem Einkomponenten-Reaktionssystem ist bevorzugt 30 bis 80 Gew.-%, besonders bevorzugt 35 bis 75 Gew.-%, insbesondere bevorzugt 40 bis 70 Gew.-%, jeweils bezogen auf A) + B) + C) + D) + E) + F) = 100 Gew.-%.

Bei der isocyanatreaktiven Komponente B) handelt es sich um eine solche Komponente, deren isocyanatreaktiven funktionellen Gruppen ausschließlich solche mit wenigstens einem Zerewitinoff-reaktiven Wasserstoffatom sind. Die isocyanatreaktive Komponente B) enthält mindestens ein Polyethercarbonatpolyol mit einem Anteil von mindestens 15 Gew.-%, bevorzugt mindestens 18 Gew.-%, besonders bevorzugt mindestens 20 Gew.-%, insbesondere bevorzugt mindestens 22 Gew.-%, bezogen auf die Summe der Gewichtsanteile von A) bis F), am Einkomponenten-Reaktionssystem. Zusätzlich zu dem Polyethercarbonatpolyol können weitere Polyole wie z.B. Polyetherpolyole, Polyesterpolyole und/oder Polyetheresterpolyole in der isocyanatreaktiven Komponente B) enthalten sein.

Polyethercarbonatpolyole werden durch Anlagerung von Alkylenoxid und Kohlendioxid an eine oder mehrere H-funktionelle Starterverbindungen in Gegenwart eines Doppelmetallcyanid-Katalysators (DMC-Katalysator) oder eines Metallkomplexkatalysators auf Basis der Metalle Zink und/oder Cobalt hergestellt, bevorzugt durch die Schritte:
(α) Vorlegen einer Teilmenge H-funktioneller Starterverbindung und/oder Suspensionsmittel, das keine H-funktionellen Gruppen enthält, in einen Reaktor gegebenenfalls gemeinsam mit DMC-Katalysator oder eines Metallkomplexkatalysators auf Basis der Metalle Zink und/oder Cobalt,
(β) gegebenenfalls Zugabe einer Teilmenge (bezogen auf die Gesamtmenge der bei der Aktivierung und Copolymerisation eingesetzten Menge an Alkylenoxid) von Alkylenoxid zu der aus Schritt (α) resultierenden Mischung zur Aktivierung eines DMC-Katalysators, wobei diese Zugabe einer Teilmenge an Alkylenoxid gegebenenfalls in Gegenwart von CO₂ erfolgen kann, und wobei dann die aufgrund der folgenden exothermen chemischen Reaktion auftretende Temperaturspitze ("Hotspot") und/oder ein Druckabfall im Reaktor jeweils abgewartet wird, und wobei der Schritt (β) zur Aktivierung auch mehrfach erfolgen kann,
(γ) Zugabe von H-funktioneller Startersubstanz, Alkylenoxid und gegebenenfalls DMC-Katalysator und/oder Kohlendioxid in den Reaktor.

Allgemein können zur Herstellung eines Polyethercarbonatpolyols Alkylenoxide (Epoxide) mit 2 bis 24 Kohlenstoffatomen eingesetzt werden. Bei den Alkylenoxiden mit 2 bis 24 Kohlenstoffatomen handelt es sich beispielsweise um eine oder mehrere Verbindungen ausgewählt aus der Gruppe bestehend aus Ethylenoxid, Propylenoxid, 1-Butenoxid, 2,3-Butenoxid, 2-Methyl-1,2-propenoxid (Isobutenoxid), 1-Pentenoxid, 2,3-Pentenoxid, 2-Methyl-1,2-butenoxid, 3-Methyl-1,2-butenoxid, 1-Hexenoxid, 2,3-Hexenoxid, 3,4-Hexenoxid, 2-Methyl-1,2-pentenoxid, 4-Methyl-1,2-pentenoxid, 2-Ethyl-1,2-butenoxid, 1-Heptenoxid, 1-Octenoxid, 1-Nonenoxid, 1-Decenoxid, 1-Undecenoxid, 1-Dodecenoxid, 4-Methyl-1,2-pentenoxid, Butadienmonoxid, Isoprenmonoxid, Cyclopentenoxid, Cyclohexenoxid, Cycloheptenoxid, Cyclooctenoxid, Styroloxid, Methylstyroloxid, Pinenoxid, ein- oder mehrfach epoxidierte Fette als Mono-, Di- und Triglyceride, epoxidierte Fettsäuren, C₁-C₂₄-Ester von epoxidierten Fettsäuren, Epichlorhydrin, Glycidol, und Derivate des Glycidols, wie beispielsweise Methylglycidylether, Ethylglycidylether, 2-Ethylhexylglycidylether, Allylglycidylether, Glycidylmethacrylat sowie epoxidfunktionelle Alkoxysilane, wie beispielsweise 3-Glycidyloxypropyltrimethoxysilan, 3-Glycidyioxypropyl-triethoxysilan, 3-Glycidyloxypropyltripropoxysilan, 3-Glycidyloxy-propyl-methyl-dimethoxysilan, 3-Glycidyloxypropylethyldiethoxysilan, 3-Glycidyloxy-propyltrlisopropoxysilan. Vorzugsweise werden als Alkylenoxide Ethylenoxid und/oder Propylenoxid und/oder 1,2 Butylenoxid, besonders bevorzugt Propylenoxid eingesetzt.

Als geeignete H-funktionelle Starterverbindung können Verbindungen mit für die Alkoxylierung aktiven H-Atomen eingesetzt werden. Für die Alkoxylierung aktive Gruppen mit aktiven H-Atomen sind beispielsweise -OH, -NH₂ (primäre Amine), -NH- (sekundäre Amine), -SH und - CO₂H, bevorzugt sind -OH und -NH₂, besonders bevorzugt ist -OH.

Als monofunktionelle Starterverbindungen können Alkohole, Amine, Thiole und Carbonsäuren eingesetzt werden. Als monofunktionelle Alkohole können Verwendung finden: Methanol, Ethanol, 1-Propanol, 2-Propanol, 1-Butanol, 2-Butanol, t-Butanol, 3-Buten-1-ol, 3-Butin-1-ol, 2-Methyl-3-buten-2-ol, 2-Methyl-3-butin-2-ol, Propagylalkohol, 2-Methyl-2-propanol, 1-t-Butoxy-2-propanol., 1-Pentanol, 2-Pentanol, 3-Pentanol, 1-Hexanol, 2-Hexanol, 3-Hexanol, 1-Heptanol, 2-Heptanol, 3-Heptanol, 1-Octanol, 2-Octanol, 3-Octanol, 4-Octanol, Phenol, 2-Hydroxybiphenyl, 3-Hydroxybiphenyl, 4-Hydroxybiphenyl, 2-Hydroxypyridin, 3-Hydroxypyridin, 4-Hydroxypyridin. Als monofunktionelle Amine kommen in Frage: Butylamin, t-Butylamin, Pentylamin, Hexylamin, Anilin, Aziridin, Pyrrolidin, Piperidin, Morpholin. Als monofunktionelle Thiole können verwendet werden: Ethanthiol, 1-Propanthiol, 2-Propanthiol, 1-Butanthiol, 3-Methyl-1-butanthiol, 2-Buten-1-thiol, Thiophenol. Als monofunktionelle Carbonsäuren seien genannt: Ameisensäure, Essigsäure, Propionsäure, Buttersäure, Fettsäuren wie Stearinsäure, Palmitinsäure, Ölsäure, Linolsäure, Linolensäure, Benzoesäure, Acrylsäure.

Als H-funktionelle Starterverbindungen geeignete mehrwertige Alkohole sind beispielweise zweiwertige Alkohole (wie beispielweise Ethylenglykol, Diethylenglykol, Propylenglykol, Dipropylenglykol, 1,3-Propandiol, 1,4-Butandiol, 1,4-Butendiol, 1,4-Butindiol, Neopentylglykol, 1,5-Pentantandiol, Methylpentandiole (wie beispielweise 3-Methyl-1,5-pentandiol), 1,6-Hexandiol, 1,8-Octandiol, 1,10-Decandiol, 1,12-Dodecandiol, Bis-(hydroxymethyl)-cyclohexane (wie beispielweise 1,4-Bis-(hydroxymethyl)cyclohexan), Triethylenglykol, Tetraethylenglykol, Polyethylenglykole, Dipropylenglykol, Tripropylenglykol, Polypropylenglykole, Dibutylenglykol und Polybutylenglykole); dreiwertige Alkohole (wie beispielweise Trimethylolpropan, Glycerin, Trishydroxyethylisocyanurat, Rizinusöl); vierwertige Alkohole (wie beispielsweise Pentaerythrit); Polyalkohole (wie beispielweise Sorbit, Hexit, Saccharose, Stärke, Stärkehydrolysate, Cellulose, Cellulosehydrolysate, hydroxyfunktionalisierte Fette und Öle, insbesondere Rizinusöl), sowie alle Modifizierungsprodukte dieser zuvorgenannten Alkohole mit unterschiedlichen Mengen an ε-Caprolacton. In Mischungen von H-funktionellen Starterverbindungen können auch dreiwertige Alkohole, wie beispielsweise Trimethylolpropan, Glycerin, Trishydroxyethyl-isocyanurat und Rizinusöl eingesetzt werden.

Die H-funktionellen Starterverbindungen können auch aus der Substanzklasse der Polyetherpolyole ausgewählt sein, insbesondere solchen mit einem Molekulargewicht Mₙ im Bereich von 100 bis 4000 g/mol, vorzugsweise 250 bis 2000 g/mol. Bevorzugt sind Polyetherpolyole, die aus sich wiederholenden Ethylenoxid- und Propylenoxideinheiten aufgebaut sind, bevorzugt mit einem Anteil von 35 bis 100% Propylenoxideinheiten, besonders bevorzugt mit einem Anteil von 50 bis 100% Propylenoxideinheiten. Hierbei kann es sich um statistische Copolymere, Gradienten-Copolymere, alternierende oder Blockcopolymere aus Ethylenoxid und Propylenoxid handeln. Geeignete Polyetherpolyole, aufgebaut aus sich wiederholenden Propylenoxid- und/oder Ethylenoxideinheiten sind beispielsweise die Desmophen®-, Acclaim®-, Arcol®-, Baycoll®-, Bayfill®-, Bayflex®-Baygal®-, PET®- und Polyether-Polyole der Covestro Deutschland AG (wie z. B. Desmophen® 3600Z, Desmophen® 1900U, Acclaim® Polyol 2200, Acclaim® Polyol 4000I, Arcol® Polyol 1004, Arcol® Polyol 1010, Arcol® Polyol 1030, Arcol® Polyol 1070, Baycoll® BD 1110, Bayfill® VPPU 0789, Baygal® K55, PET® 1004, Polyether® S180). Weitere geeignete homo-Polyethylenoxide sind beispielsweise die Pluriol® E-Marken der BASF SE, geeignete homo-Polypropylenoxide sind beispielsweise die Pluriol® P-Marken der BASF SE, geeignete gemischte Copolymere aus Ethylenoxid und Propylenoxid sind beispielsweise die Pluronic® PE oder Pluriol® RPE-Marken der BASF SE.

Die H-funktionellen Starterverbindungen können auch aus der Substanzklasse der Polyesterpolyole ausgewählt sein, insbesondere solchen mit einem Molekulargewicht Mₙ im Bereich von 200 bis 4500 g/mol, vorzugsweise 400 bis 2500 g/mol. Als Polyesterpolyole werden mindestens difunktionelle Polyester eingesetzt. Bevorzugt bestehen Polyesterpolyole aus alternierenden Säure- und Alkoholeinheiten. Als Säurekomponenten werden z. B. Bernsteinsäure, Maleinsäure, Maleinsäureanhydrid, Adipinsäure, Phthalsäureanhydrid, Phthalsäure, Isophthalsäure, Terephthalsäure, Tetrahydrophthalsäure, Tetrahydrophthalsäureanhydrid, Hexahydrophthalsäureanhydrid oder Gemische aus den genannten Säuren und/oder Anhydride eingesetzt. Als Alkoholkomponenten werden z. B. Ethandiol, 1,2-Propandiol, 1,3-Propandiol, 1,4-Butandiol, 1,5-Pentandiol, Neopentylglykol, 1,6-Hexandiol, 1,4-Bis-(hydroxymethyl)-cyclohexan, Diethylenglykol, Dipropylenglykol, Trimethylolpropan, Glycerin, Pentaerythrit oder Gemische aus den genannten Alkoholen verwendet. Werden als Alkoholkomponente zweiwertige oder mehrwertige Polyetherpolyole eingesetzt, so erhält man Polyesteretherpolyole die ebenfalls als Starterverbindungen zur Herstellung der Polyethercarbonatpolyole dienen können. Falls Polyetherpolyole zur Her-stellung der Polyesteretherpolyole eingesetzt werden, sind Polyetherpolyole mit einem zahlenmittleren Molekulargewicht Mₙ von 150 bis 2000 g/mol bevorzugt.

Des Weiteren können als H-funktionelle Starterverbindungen Polycarbonatpolyole (wie beispielsweise Polycarbonatdiole) eingesetzt werden, insbesondere solchen mit einem Molekulargewicht Mₙ im Bereich von 150 bis 4500 g/mol, vorzugsweise 500 bis 2500, die beispielsweise durch Umsetzung von Phosgen, Dimethylcarbonat, Diethylcarbonat oder Diphenylcarbonat und di- und/oder polyfunktionellen Alkoholen oder Polyesterpolyolen oder Polyetherpolyolen hergestellt werden. Beispiele zu Polycarbonatpolyolen finden sich z. B. in der EP-A 1359177. Beispielsweise können als Polycarbonatdiole die Desmophen® C-Typen der Covestro Deutschland AG verwendet werden, wie z. B. Desmophen® C 1100 oder Desmophen® C 2200.

Daneben kann die Komponente B) Anteile an weiteren Polyolen, z.B. Polyetherpolyole, Polyesterpolyole und/oder Polyetheresterpolyole enthalten.

Bei den Polyetherpolyolen handelt es sich bevorzugt um Polyhydroxypolyether, welche auf an sich bekannte Weise durch Polyaddition von den bereits oben beschriebenen Alkylenoxiden an polyfunktionelle Starterverbindungen in Gegenwart von Katalysatoren hergestellt werden können. Bevorzugt werden die Polyhydroxypolyether aus einer Starterverbindung mit durchschnittlich 2 bis 8 aktiven Wasserstoffatomen und einem oder mehreren Alkylenoxiden hergestellt. Bevorzugte Starterverbindungen sind Moleküle mit zwei bis acht Hydroxylgruppen pro Molekül wie Wasser, Ethylenglykol, Propylenglykol, Diethylenglykol, Dipropylenglykol, Triethylenglykol, Tripropylenglykol, 1,4-Butandiol, 1,6-Hexandiol, Triethanolamin, Glycerin, Trimethylolpropan, Pentaerythrit, Sorbit und Saccharose. Die Starterverbindungen können allein oder im Gemisch verwendet werden. Die Starterverbindung werden mit einem Alkylenoxid, bevorzugt mit Ethylenoxid und/oder Propylenoxid, hergestellt. Bei Verwendung im Gemisch ist es möglich, die Alkylenoxide statistisch und/oder blockweise umzusetzen. Ebenfalls geeignet sind solche höhermolekularen Polyhydroxypolyether, in denen hochmolekulare Polyaddukte bzw. Polykondensate oder Polymerisate in feindisperser, gelöster oder aufgepropfter Form vorliegen. Derartige modifizierte Polyhydroxylverbindungen werden z.B. erhalten, wenn man Polyadditionsreaktionen (z.B. Umsetzungen zwischen Polyisocyanaten und aminofunktionellen Verbindungen) bzw. Polykondensationsreaktionen (z.B. zwischen Formaldehyd und Phenolen und/oder Aminen) in situ in den Hydroxylgruppen aufweisenden Verbindungen ablaufen lässt (wie beispielsweise in DE-AS 1 168 075 beschrieben). Auch durch Vinylpolymerisate modifizierte Polyhydroxylverbindungen, wie sie z.B. durch Polymerisation von Styrol und Acrylnitril in Gegenwart von Polyethern (z.B. gemäß US-PS 3 383 351) erhalten werden, sind für das erfindungsgemäße Verfahren als isocyanatreaktive Komponente B) geeignet. Vertreter der genannten Komponente B) sind z.B. im Kunststoff-Handbuch, Band VII "Polyurethane", 3. Auflage, Carl Hanser Verlag, München / Wien, 1993, Seiten 57 - 67 bzw. Seiten 88 - 90 beschrieben.

Bevorzugt wird ein Polyethercarbonatpolyol mit einer Funktionalität von 1,0 bis 4,0, besonders bevorzugt 1,5 bis 3,5, insbesondere bevorzugt 1,9 bis 3,0 eingesetzt. Die Hydroxylzahl des Polyethercarbonatpolyols kann beispielsweise 10 bis 800 mg KOH/g betragen, bevorzugt 25 bis 500 mg KOH/g, besonders bevorzugt 50 bis 300 mg KOH/g, insbesondere bevorzugt 100 bis 250 mg KOH/g.

Die als isocyanatreaktive Komponente B) eingesetzten Verbindungen können ebenfalls als Präpolymere vorliegen. Die Herstellung eines Präpolymers kann im Prinzip auf jede dem Fachmann bekannte Weise erfolgen. In vorteilhafter Ausgestaltung wird diese durch Umsetzung von zumindest einer isocyanatreaktiven Komponente B) mit einem Überschuss der organischen Polyisocyanatverbindung A), gegebenenfalls gefolgt von teilweisem Abdestillieren der nicht reagierten Polyisocyanatverbindung A) bis zum gewünschten Gehalt an freiem Isocyanat, hergestellt. Die Umsetzung der Komponenten A) und B) kann in Gegenwart einer die Präpolymerisierung katalysierenden Katalysatorkomponente ("Präpolymerisierungskatalysator") erfolgen, bevorzugt erfolgt die Umsetzung jedoch nicht in Gegenwart eines Präpolymerisierungskatalysators bzw. es sind höchstens technisch unvermeidbare Spuren eines Präpolymerisierungskatalysators anwesend.

Die zur Verwendung als isocyanatreaktive Komponente B) beschriebenen Verbindungen können einzeln oder als Gemische eingesetzt werden, wobei die isocyanatreaktive Verbindung bevorzugt
- eine (mittlere) OH-Zahl von 100 bis 400 mg KOH/g aufweist, besonders bevorzugt 150 bis 300 mg KOH/g und/ oder
- eine Funktionalität Fₙ von 1,0 bis 4,0 besitzt, besonders bevorzugt 1,5 bis 3,5, insbesondere bevorzugt 1,8 bis 3,0, aufweist.

Der Anteil der isocyanatreaktiven Komponente B) an dem Einkomponenten-Reaktionssystem ist bevorzugt 15 bis 50 Gew.-%, besonders bevorzugt 25 bis 45 Gew.-%, insbesondere bevorzugt 28 bis 40 Gew.-%, jeweils bezogen auf A) + B) + C) + D) + E) + F) = 100 Gew.-%.

In einer bevorzugten Ausführungsform enthält die isocyanatreaktive Komponente B) mindestens ein Polyethercarbonatpolyol mit einem Anteil von 10 bis 50 Gew.-%, bevorzugt 18 bis 50 Gew.-%, besonders bevorzugt 20 bis 45 Gew.-%, insbesondere bevorzugt 22 bis 40 Gew.-%, jeweils bezogen auf A) + B) + C) + D) + E) + F) = 100 Gew.-%.

In einer weiteren bevorzugten Ausführungsform enthält die isocyanatreaktive Komponente B) mindestens ein Polyethercarbonatpolyol mit einem Anteil von 30 bis 100 Gew.-%, bevorzugt 50 bis 100 Gew.-%, besonders bevorzugt 80 bis 100 Gew.-%, jeweils bezogen auf B) = 100 Gew.-%.

Weiterhin enthält das Einkomponenten-Reaktionssystem mindestens einen Schaumstabilisator C). Dabei kann es sich um siliconhaltige Schaumstabilisatoren handeln, wie Siloxan-Oxyalkylen-Mischpolymerisate und andere Organopolysiloxane, ferner Alkoxylierungsprodukte von Fettalkoholen, Oxoalkoholen, Fettaminen, Alkylphenolen, Dialkylphenolen, Alkylkresolen, Alkylresorcin, Naphthol, Alkylnaphthol, Naphtylamin, Anilin, Alkylanilin, Toluidin, Bisphenol-A, alkyliertem Bisphenol-A, Polyvinylalkohol, sowie weiterhin Alkoxylierungsprodukte von Kondensationsprodukten aus Formaldehyd und Alkylphenolen, Formaldehyd und Dialkylphenolen, Formaldehyd und Alkylkresolen, Formaldehyd und Alkylresorcin, Formaldehyd und Anilin, Formaldehyd und Toluidin, Formaldehyd und Naphthol, Formaldehyd und Alkylnaphthol sowie Formaldehyd und Bisphenol-A. Als Alkoxylierungsreagenzien können beispielsweise Ethylenoxid und/oder Propylenoxid eingesetzt werden. Als Schaumstabilisatoren eignen sich insbesondere solche Schaumstabilisatoren, welche ausgewählt sind aus der Gruppe der Polyether-Polydialkoxysilan-Copolymere, wobei die Alkoxygruppen unabhängig voneinander insbesondere ausgewählt sind aus aliphatischen Kohlenwasserstoffresten mit einem bis zehn Kohlenstoffatomen, vorzugsweise aus Methyl-, Ethyl-, n-Propyl- oder i-Propyl-Resten.

Der Schaumstabilisator C) kann einen Trübungspunkt von wenigstens 40 °C aufweisen, insbesondere von wenigstens 50 °C, vorzugsweise von wenigstens 60 °C, gemessen in einer 4 Gew.-% wässrigen Lösung des Schaumstabilisators C) und schrittweise Erhöhung der Temperatur von 20 °C startend mit einer Aufheizrate von 2 °C/min und Ermittlung des Trübungspunktes durch optische Beurteilung des Zeitpunktes der einsetzenden Trübung. Dies ist von Vorteil, weil durch Einsatz solcher Schaumstabilisatoren die Brandschutzeigenschaften der erhaltenen Polyurethan-Hartschaumstoffe weiter gesteigert werden kann. Die vorgenannten Werte für den Trübungspunkt können alternativ auch nephelometrisch unter Heranziehung der DIN EN ISO 7027 (2000) bestimmt werden, ohne an die vorgenannte Verfahrensweise mit kombinierter Temperaturänderung gebunden zu sein. Ganz besonders bevorzugt sind solche Schaumstabilisatoren C), welche ein hohes Verhältnis von Ethylenoxid zu Propylenoxid in den Polyetherseitenketten der Silikon-Polyether-Copolymere aufweisen und gleichzeitig einen niedrigen (< 5) Dimethylsiloxananteil aufweisen. Beispiele hierfür gibt die Formel (II) wieder. 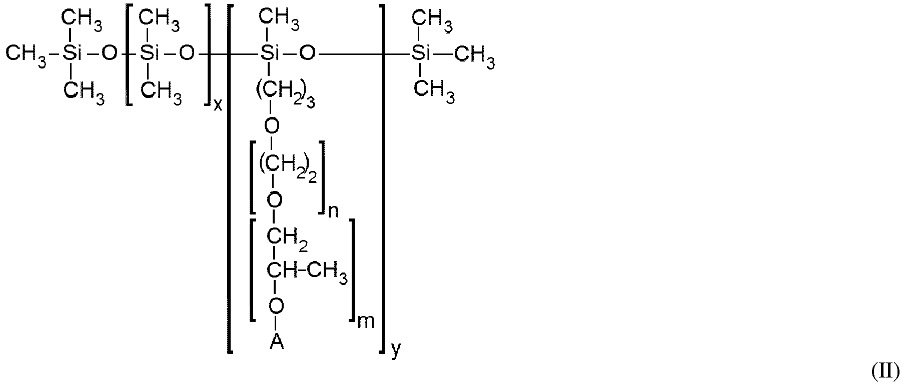
mit x, y = ganze Zahl > 0 und x/y = Dimethylsiloxananteil < 5,
n, m = ganze Zahl > 0 und n/m = Ethylenoxid / Propylenoxid - Verhältnis;
A = Aryl, Alkyl oder H

Die in Tabelle 1 angegebenen Strukturmerkmale beziehen sich auf die in Formel (II) gezeigte schematische Strukturformel typischer Silikonstabilisatoren. Solche Silikonstabilisatoren sind beispielsweise von den Firmen Schill+Seilacher GmbH oder Evonik Industries AG erhältlich. Von diesen Schaumstabilisatoren sind solche bevorzugt, deren OH-Zahl im Bereich von 90 bis 130 mg KOH/g liegt (z.B. Schaumstabilisator 1 und 2).

**Tabelle 1**

| | X/Y Dimethylsiloxananteil | n/m EO/PO-Verhältnis | OH-Zahl in mg KOH/g |
|---|---|---|---|
| Schaumstabilisator 1 | 2,73 | 1,66 | 100 - 130 |
| Schaumstabilisator 2 | 3,64 | 1,89 | 90 - 120 |
| Schaumstabilisator 3 | 9,44 | 0,51 | |
| Schaumstabilisator 4 | 9,4 | 1,09 | |
| Schaumstabilisator 5 | 9,89 | 2,33 | |

Der Anteil des Schaumstabilisators C) an dem Einkomponenten-Reaktionssystem ist bevorzugt 0,2 bis 4,0 Gew.-%, besonders bevorzugt 0,3 bis 3,5 Gew.-%, insbesondere bevorzugt 0,5 bis 3,0 Gew.-%, jeweils bezogen auf A) + B) + C) + D) + E) + F) = 100 Gew.-%.

Bei dem erfindungsgemäßen Einkomponenten-Reaktionssystem kann als Katalysator D) prinzipiell jeder für diesen Zweck dem Fachmann als geeignet bekannter Katalysator verwendet werden, beispielsweise ein Aminkatalysator. Insbesondere ist 2,2'-Dimorpholinyldiethylether als Katalysator D) bevorzugt, da er besonders selektiv die Reaktion des Isocyanats mit Wasser katalysiert.

Der Anteil des Katalysators D) an dem Einkomponenten-Reaktionssystem ist bevorzugt 0,1 bis 2,0 Gew.-%, besonders bevorzugt 0,1 bis 1,5 Gew.-%, insbesondere bevorzugt 0,1 bis 1,0 Gew.-%, jeweils bezogen auf A) + B) + C) + D) + E) + F) = 100 Gew.-%.

Das Reaktionssystem enthält weiterhin als Komponente E) wenigstens ein physikalisches Treibmittel mit einem Siedepunkt < 0 °C und gegebenenfalls Co-Treibmittel. Als Treibmittel sind Kohlenwasserstoffe bevorzugt, insbesondere die Isomeren des Propan und Butan. Als Co-Treibmittel sind ebenfalls physikalische Treibmittel mit einem Siedepunkt < 0 °C bevorzugt, welche zusätzlich noch eine emulgierende oder löslichkeitsvermittelnde Wirkung aufweisen. Bevorzugt wird als Co-Treibmittel Dimethylether eingesetzt.

In einer bevorzugten Ausführungsform wird als Co-Treibmittel Dimethylether eingesetzt und als Treibmittel mindestens eine Verbindung ausgewählt aus der Gruppe bestehend aus den Isomeren des Propans und des Butans.

Der Anteil der Komponente E) an dem Einkomponenten-Reaktionssystem ist bevorzugt 10 bis 30 Gew.-%, besonders bevorzugt 10 bis 25 Gew.-%, insbesondere bevorzugt 12 bis 22 Gew.-%, jeweils bezogen auf A) + B) + C) + D) + E) + F) = 100 Gew.-%.

Das Reaktionssystem kann daneben weitere Hilfs- und Zusatzstoffe F) enthalten, z.B. Flammschutzmittel, Zellregler, Weichmacher und Verdünner, wie z.B. langkettige Chlorparaffine und Paraffine, Pigmente oder Farbstoffe, oberflächenaktive Verbindungen und/oder Stabilisatoren gegen oxidativen, thermischen oder mikrobiellen Abbau bzw. Alterung.

Der Anteil weiterer Hilfs- und Zusatzstoffe F) an dem Einkomponenten-Reaktionssystem ist bevorzugt 0,0 bis 20,0 Gew.-%, besonders bevorzugt 0,0 bis 15,0 Gew.-%, insbesondere bevorzugt 0,1 bis 15,0 Gew.-%, jeweils bezogen auf A) + B) + C) + D) + E) + F) = 100 Gew.-%.

Nähere Angaben über die oben genannten und weitere Ausgangsstoffe sind der Fachliteratur, beispielsweise dem Kunststoffhandbuch, Band VII, Polyurethane, Carl Hanser Verlag München, Wien, 1., 2. und 3. Auflage 1966, 1983 und 1993, zu entnehmen.

Das Reaktionssystem kann ferner eine Säure, bevorzugt mit einem pKs-Wert von wenigstens 0, oder ein Säurederivat wie z.B. ein Säurechlorid, bevorzugt ein Säurechlorid einer aromatischen Carbonsäure, z.B. Phthalsäuredichlorid, enthalten, insbesondere in einer Menge von 10 bis 500 ppm bezogen auf die Menge an organischer Polyisocyanatkomponente A), vorzugsweise von 50 bis 300 ppm. Durch den Zusatz solcher Verbindungen kann bei dem Einsatz von Präpolymeren eine Reaktion des Präpolymers mit sich selbst weitestgehend unterdrückt werden, beispielsweise eine Allophanatisierung.

In einer bevorzugten Ausführungsform enthält das Reaktionssystem keine kurzkettigen Monoole oder Hydroxyketone. Als "kurzkettig" im Sinne dieser Anmeldung werden insbesondere solche Monoole bzw. Hydroxyketone bezeichnet, welche ein Molekulargewicht von < 200 g/mol aufweisen. Solche Verbindungen können als Zellöffner wirken, was hier nicht erwünscht ist.

In einer ersten Ausführungsform betrifft die Erfindung ein Einkomponenten-Reaktionssystem zur Herstellung von Polyurethan-Hartschaumstoffen, umfassend die folgenden Bestandteile:
A) mindestens eine organische Polyisocyanatkomponente,
B) mindestens eine isocyanatreaktive Komponente, deren isocyanatreaktiven funktionellen Gruppen ausschließlich solche mit wenigstens einem Zerewitinoff-reaktiven Wasserstoffatom sind,
C) mindestens einen Schaumstabilisator,
D) mindestens einen Katalysator, der geeignet ist, die Reaktion der Polyisocyanatkomponente A) mit der isocyanatreaktiven Komponente B) zu katalysieren,
E) mindestens ein physikalisches Treibmittel mit einem Siedepunkt von weniger als 0 °C und gegebenenfalls Co-Treibmittel, sowie
F) gegebenenfalls Hilfs- und Zusatzstoffe,
dadurch gekennzeichnet, dass
die isocyanatreaktive Komponente B) mindestens 10 Gew.-%, bezogen auf die Summe der Gewichtsanteile von A) bis F) = 100 Gew.-%, eines Polyethercarbonatpolyols enthält.

In einer zweiten Ausführungsform betrifft die Erfindung ein Einkomponenten-Reaktionssystem gemäß der ersten Ausführungsform, dadurch gekennzeichnet, dass die Komponente A) mindestens 90 Gew.-% aromatische Polyisocyanate, bezogen auf A) = 100 Gew.-%, enthält.

In einer dritten Ausführungsform betrifft die Erfindung ein Einkomponenten-Reaktionssystem gemäß einer der Ausführungsformen 1 oder 2, dadurch gekennzeichnet, dass die Komponente B) ein Polyol mit einer Funktionalität Fₙ von 1,0 bis 4,0, bevorzugt 1,5 bis 3,5, besonders bevorzugt 1,9 bis 3,0, enthält.

In einer vierten Ausführungsform betrifft die Erfindung ein Einkomponenten- Reaktionssystem gemäß einer der Ausführungsformen 1 bis 3, dadurch gekennzeichnet, dass die Komponente B) ein Polyetherpolyol mit einer OH-Zahl von 50 bis 300 mg KOH/g, bevorzugt 75 bis 275 mg KOH/g, insbesondere bevorzugt 100 bis 250 mg KOH/g, enthält.

In einer fünften Ausführungsform betrifft die Erfindung ein Einkomponenten-Reaktionssystem gemäß einer der Ausführungsformen 1 bis 4, dadurch gekennzeichnet, dass als Schaumstabilisator C) Verbindungen mit einer Strukturformel (II) 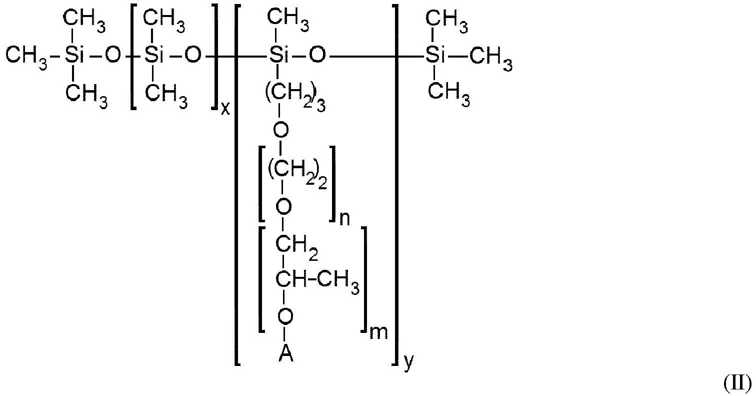
mit x, y = ganze Zahl > 0 und x/y = Dimethylsiloxananteil < 5,
n, m= ganze Zahl > 0 und n/m = Ethylenoxid / Propylenoxid - Verhältnis;
A = Aryl, Alkyl oder H
eingesetzt werden.

In einer sechsten Ausführungsform betrifft die Erfindung ein Einkomponenten-Reaktionssystem gemäß einer der Ausführungsformen 1 bis 5 umfassend die folgenden Komponenten:
30 bis 70 Gew.-% organische Polyisocyanatkomponente A),
15 bis 50 Gew.-% isocyanatreaktive Komponente B),
0,2 bis 4,0 Gew.-% eines Schaumstoffstabilisators C),
0,1 bis 1,0 Gew.-% an Katalysator D) und
10 bis 30 Gew.-% mindestens eines physikalischen Treibmittels mit einem Siedepunkt von weniger als 0 °C sowie gegebenenfalls Co-Treibmittel (Komponente E), und
0,0 bis 20,0 Gew.-% Hilfs- und Zusatzstoffe (Komponente F),
jeweils bezogen auf A) + B) + C) + D) + E) + F) = 100 Gew.-%.

In einer siebten Ausführungsform betrifft die Erfindung ein Einkomponenten-Reaktionssystem gemäß einer der Ausführungsformen 1 bis 6, dadurch gekennzeichnet, dass die Isocyanat-Kennzahl 350 bis 550 beträgt.

In einer achten Ausführungsform betrifft die Erfindung ein Verfahren zur Herstellung eines Einkomponenten-Reaktionssystems durch Umsetzung der organischen Polyisocyanatkomponente
A) mit
B) einer isocyanatreaktiven Komponente, deren isocyanatreaktiven funktionellen Gruppen ausschließlich solche mit wenigstens einem Zerewitinoff-reaktiven Wasserstoffatom sind,
   in Anwesenheit von
C) mindestens einem Schaumstabilisator,
D) mindestens einem Katalysator, der geeignet ist, die Reaktion des Semipräpolymers mit der Luftfeuchtigkeit zu katalysieren,
E) mindestens einem physikalischen Treibmittel mit einem Siedepunkt von weniger als 0 °C und gegebenenfalls Co-Treibmittel, sowie
F) gegebenenfalls Hilfs- und Zusatzstoffen.

In einer neunten Ausführungsform betrifft die Erfindung ein Verfahren zur Herstellung eines Polyurethan-Hartschaumstoffs, erhältlich durch Vermischen und Umsetzen der Komponenten A) bis F) eines Einkomponenten-Reaktionssystems nach einer der Ausführungsformen 1 bis 7 unter Einwirkung von Feuchtigkeit.

In einer zehnten Ausführungsform betrifft die Erfindung ein Verfahren zur Herstellung eines Polyurethan-Hartschaumstoffs, umfassend die Schritte
a) Herstellung eines Einkomponenten-Reaktionssystems nach einem Verfahren gemäß der achten Ausführungsform und
b) Einwirken von Feuchtigkeit auf das in Schritt a) hergestellte Einkomponenten-Reaktionssystem.

In einer elften Ausführungsform betrifft die Erfindung einen Polyurethan-Hartschaumstoff, erhältlich nach einem Verfahren gemäß einer der Ausführungsformen 9 oder 10.

In einer zwölften Ausführungsform betrifft die Erfindung die Verwendung eines Einkomponenten-Reaktionssystems nach einer der Ausführungsformen 1 bis 7 als 1-K Montageschaumstoff, wobei das Einkomponenten-Reaktionssystem in einen Druckbehälter eingefüllt ist.

In einer dreizehnten Ausführungsform betrifft die Erfindung einen Druckbehälter, insbesondere einen Einwegdruckbehälter, enthaltend ein Einkomponenten-Reaktionssystem nach einer der Ausführungsformen 1 bis 7.

In einer vierzehnten Ausführungsform betrifft die Erfindung die Verwendung von Polyurethan-Hartschaumstoffen gemäß der elften Ausführungsform für Anwendungen in der Bauindustrie.

### Experimenteller Teil

Die Herstellung der erfindungsgemäßen PUR-Hartschaumstoffe erfolgt nach einem dem Fachmann bekannten Zweistufenverfahren, bei dem die Reaktionskomponenten diskontinuierlich miteinander zur Reaktion gebracht werden und dann in bzw. auf geeignete Formen/Substrate/Hohlräume zur Aushärtung gebracht werden. Beispiele sind in USA-A 2 761 565, in G. Oertel (Hrsg.) "Kunststoff-Handbuch", Band VII, Carl Hanser Verlag, 3. Auflage, München 1993, S. 284 ff., sowie in K. Uhlig (Hrsg.) "Polyurethan Taschenbuch", Carl Hanser Verlag, 2. Auflage, Wien 2001, S. 83-102 beschrieben.

Die Messung der Hydroxylzahlen wurde mittels NIR-Spektroskopie (Lambda 950, Perkin-Elmer, PC-gesteuert) durchgeführt. Die Kombinationsschwingung der v(OH)- und δ(OH)-Grundschwingungen wurden im Bereich von 2050 bis 2100 nm für die in den Beispielen eingesetzten Proben und Kalibrierproben gemessen. Die Proben und Kalibrierproben wurden für die Messungen auf 20°C temperiert. Als Kalibrierproben wurden Polyetherpolyole eingesetzt, deren OH-Zahl gemäß der Norm DIN 53240-2 (1998) ermittelt wurde. Die Ergebnisse der NIR-Spektroskopie der Proben wurden mit den Ergebnissen der Kalibrierproben nach der Max-Min-Methode verglichen und daraus die OH-Zahl der Proben ermittelt.

Für die Bestimmung des NCO-Gehalts im Polyisocyanat wurde die Norm EN ISO 11909 (2007) angewendet.

### Einsatzstoffe

- Polyol 1: linearer Propylenglykol gestarteter Propylenoxidpolyether, Äquivalentgewicht 501 g/mol, OH-Zahl 112 mg KOH/g
- Polyol 2: Glycerin-gestarteter Propylenoxidpolyether, Äquivalentgewicht 243 g/mol, OH-Zahl 231 mg KOH/g
- Polyol 3: Glycerin-gestarteter Propylenoxidpolyether, Äquivalentgewicht 360 g/mol, OH-Zahl 156 mg KOH/g
- Polyol 4: lineares Propylenglykol gestarteter Polyethercarbonatpolyol, Äquivalentgewicht 500 g/mol, OH-Zahl 112 mg KOH/g
- Polyol 5: Glycerin-gestartetes Polyethercarbonatpolyol, Äquivalentgewicht, 355 g/mol, OH-Zahl 158 mg KOH/g
- Polyol 6: Glycerin/Propylenglykol-gestartetes Polyethercarbonatpolyol, Äquivalentgewicht 330 g/mol, OH-Zahl 170 mg/KOH
- FM: Flammschutzmittel, Tris(2-chlorisopropyl)phosphat (TCPP)
- Stab 1: Polyethersiloxan Schaumstabilisator (TEGOSTAB B 8870, Fa. Evonik)
- Stab 2: Polyethersiloxan Schaumstabilisator (Niax Silicone L-6164, Fa. Momentive)
- Stab 3: Polyethersiloxan Schaumstabilisator (TEGOSTAB B 8871, Fa. Evonik)
- Zellöffner: Polysiloxan (Tegiloxan 100, Fa. Evonik)
- Katalysator: 2,2'-Dimorpholinyldiethylether (DMDEE)
- Treibmittel 1: n-Butan
- Treibmittel 2: Isobutan (Fa. Merck)
- Treibmittel 3: Dimethylether (Fa. Merck)
- Treibmittel 4: Propan
- Polyisocyanat: Desmodur® 44V20L, polymeres MDI mit einem Isocyanatgehalt von 31,5 Gew.-% (Fa. Covestro Deutschland AG)

### Herstellung der 1K-Formulierungen in Einweg-Druckbehältern

Zur Herstellung der 1K-Formulierungen in Einweg-Druckbehältern wurde nacheinander die benötigte Menge der Polyolkomponenten in einem Mischbehälter vorgelegt und mit entsprechenden Mengen an Katalysator, Treibmittel und Hilfs- und Zusatzmittel vermischt (Tabelle 2). Anschließend wurde die Mischung in einen Einweg-Druckbehälter überführt. Im Anschluss wurde die der Kennzahl entsprechend Menge Polyisocyanat der Dose zugegeben und diese mit einem Ventil dicht verschlossen. Über das aufgesetzte Ventil wurden mittels einer entsprechenden Dosiereinheit die benötigten Mengen an Treibmittel zugesetzt. Abschließend wurde der Einweg-Druckbehälter bis zur vollständigen Homogenisierung der 1K-Formulierung geschüttelt. Die so hergestellten 1K-Formulierungen sind nachfolgend in den Beispielen der Tabelle 3 angegeben.

### Bestimmung der Schwindung / Quellung (Dimensionsstabilität)

Der PUR-Hartschaumstoff wird aus der Dose in eine Form (600 mm x 30 mm x 60 mm) ausgetragen, welche mit Papier ausgekleidet und mit Wasser besprüht ist. Nach 1 Tag wird der entstandene PUR-Hartschaumstoffstrang aus der Form entnommen. In der Mitte des Stranges (bei 300 mm) wird die Dicke mit einem Dickenmesser gemessen. Das Verhältnis von PUR-Hartschaumstoffstrangdicke zur Formbreite (30 mm) stellt die Dimensionsstabilität (Schwindung/Quellung) dar. Die Dicke der Mitte des Strangs (bei 300 mm) wird nochmals 7 Tage nach dem Verschäumen mit einem Dickenmesser gemessen. Die zur Aushärtung erforderliche Feuchtigkeit wird über das Besprühen des Papiers mit Wasser geliefert. Diese Verfahrensweise ist unabhängig von der jeweilig vorherrschenden Luftfeuchtigkeit und liefert die reproduzierbarsten Ergebnisse.

Alle Ergebnisse zu den gemäß der vorliegenden Anmeldung hergestellten 1-K Reaktionssystemen sowie den hieraus hergestellten Polyurethan-Hartschaumstoffen (Freischäumen) und deren Eigenschaften sind in der Tabelle 3 zusammengefasst.

**Tabelle 2: 1K-Formulierung**

| **Beispiel** | | **1*** | **2** | **3*** | **4** | **5*** | **6** |
|---|---|---|---|---|---|---|---|
| Polyol 1 | g | 91,20 | - | 91,20 | - | 30,12 | 30,12 |
| Polyol 2 | g | 4,96 | 4,96 | - | - | - | - |
| Polyol 3 | g | - | - | 4,96 | - | 30,12 | - |
| Polyol 4 | g | - | 91,20 | - | 91,20 | - | - |
| Polyol 5 | g | - | - | - | 4,96 | - | - |
| Polyol 6 | g | - | - | - | - | - | 30,12 |
| FM | g | - | - | - | - | 33,13 | 33,13 |
| Stab 1 | g | 2,48 | 2,48 | 2,48 | 2,48 | - | - |
| Stab 2 | g | 0,59 | 0,59 | 0,59 | 0,59 | - | - |
| Stab 3 | g | - | - | - | - | 5,42 | 5,42 |
| Zellöffner | g | 0,08 | 0,08 | 0,08 | 0,08 | - | - |
| Katalysator | g | 0,69 | 0,69 | 0,69 | 0,69 | 1,20 | 1,20 |

| | | | | | | | |
|---|---|---|---|---|---|---|---|
| * Vergleichsbeispiel | | | | | | | |

**Tabelle 3: Dosenrezeptur**

| **Beispiel** | | **1*** | **2** | **3*** | **4** | **5*** | **6** |
|---|---|---|---|---|---|---|---|
| Gesamtmenge an 1K-Formulierung aus Tabelle 2 | g | 167,4 | 169,36 | 169,36 | 171,66 | 218,80 | 214,65 |
| Treibmittel 1 | g | - | - | - | - | 24,9 | 25,0 |
| Treibmittel 2 | g | 53,2 | 53,8 | 53,2 | 53,8 | 7 | 7,1 |
| Treibmittel 3 | g | 29,3 | 29,6 | 29,3 | 29,6 | 13,7 | 13,7 |
| Treibmittel 4 | g | 15,1 | 15,2 | 15,1 | 15,2 | 27 | 27 |
| Polyisocyanat | g | 222,24 | 224,83 | 224,83 | 222,19 | 224,70 | 231,23 |
| Füllmenge | g | 487,18 | 492,86 | 492,86 | 492,57 | 516,06 | 518,67 |
| Kennzahl | | 460,0 | 460,0 | 460,0 | 460,0 | 500,0 | 500,0 |
| Anteil an Polyethercarbonatpolyol in der Dosenrezeptur | Gew.-% | 0 | 31,3 | 0 | 31,8 | 0 | 12,5 |
| Dimensionsstabilität Strang nach 1 Tag | % | 4 | 0 | -6 | -0,33 | -20,67 | 1,7 |
| Dimensionsstabilität Strang nach 7 Tagen | % | 6 | 0,67 | -3 | 0 | -30,67 | 0 |

| | | | | | | | |
|---|---|---|---|---|---|---|---|
| *Vergleichsbeispiel | | | | | | | |

Die Beispiele 1, 3 und 5 wurden ohne Verwendung eines Polyethercarbonatpolyols hergestellt und führen zu einer starken Quellung (Beispiel 1) bzw. Schwindung (Beispiel 3 und 5) des PUR-Hartschaumstoffs. Der Austausch der Polyetherpolyole aus Beispiel 1 und 3 durch entsprechende Polyethercarbonatpolyole führt in den Beispielen 2 und 4 zu einer deutlich reduzierten Quellung bzw. Schwindung der erhaltenen PUR-Hartschaumstoffe. Ebenfalls wird eine deutlich verbesserte Dimensionsstabilität des PUR-Hartschaumstoffes in Beispiel 6 durch den Einsatz von mindestens 10 Gew.-%, bezogen auf die Summe der Gewichtsanteile von A) bis F) = 100 Gew.-%, eines Polyethercarbonatpolyols als isocyanatreaktive Komponente im Vergleich zu Beispiel 5 erhalten.

## Patentansprüche

1. Einkomponenten-Reaktionssystem zur Herstellung von Polyurethan-Hartschaumstoffen, umfassend die folgenden Bestandteile:
A) mindestens eine organische Polyisocyanatkomponente,
B) mindestens eine isocyanatreaktive Komponente, deren isocyanatreaktiven funktionellen Gruppen ausschließlich solche mit wenigstens einem Zerewitinoff-reaktiven Wasserstoffatom sind,
C) mindestens einen Schaumstabilisator,
D) mindestens einen Katalysator, der geeignet ist, die Reaktion der Polyisocyanatkomponente A) mit der isocyanatreaktiven Komponente B) zu katalysieren,
E) mindestens ein physikalisches Treibmittel mit einem Siedepunkt von weniger als 0 °C und gegebenenfalls Co-Treibmittel, sowie
F) gegebenenfalls Hilfs- und Zusatzstoffe,
**dadurch gekennzeichnet, dass**
die isocyanatreaktive Komponente B) mindestens 10 Gew.-%, bezogen auf die Summe der Gewichtsanteile von A) bis F) = 100 Gew.-%, eines Polyethercarbonatpolyols enthält.

2. Einkomponenten-Reaktionssystem gemäß Anspruch 1, **dadurch gekennzeichnet, dass** die Komponente A) mindestens 90 Gew.-% aromatische Polyisocyanate, bezogen auf A) = 100 Gew.-%, enthält.

3. Einkomponenten-Reaktionssystem gemäß Anspruch 1 oder 2, **dadurch gekennzeichnet, dass** die Komponente B) ein Polyol mit einer Funktionalität Fₙ von 1,0 bis 4,0, bevorzugt 1,5 bis 3,5, besonders bevorzugt 1,9 bis 3,0, enthält.

4. Einkomponenten- Reaktionssystem gemäß einem der Ansprüche 1 bis 3, **dadurch gekennzeichnet, dass** die Komponente B) ein Polyetherpolyol mit einer OH-Zahl von 50 bis 300 mg KOH/g, bevorzugt 75 bis 275 mg KOH/g, insbesondere bevorzugt 100 bis 250 mg KOH/g, enthält.

5. Einkomponenten-Reaktionssystem gemäß einem der Ansprüche 1 bis 4, **dadurch gekennzeichnet, dass** als Schaumstabilisator C) Verbindungen mit einer Strukturformel (I) 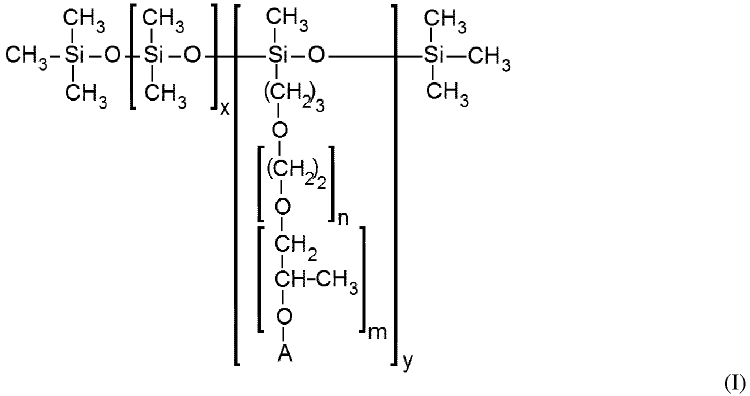
mit x, y = ganze Zahl > 0 und x/y = Dimethylsiloxananteil < 5,
n, m= ganze Zahl > 0 und n/m = Ethylenoxid / Propylenoxid - Verhältnis;
A = Aryl, Alkyl oder H
eingesetzt werden.

6. Einkomponenten-Reaktionssystem gemäß einem der Ansprüche 1 bis 5 umfassend die folgenden Komponenten:
30 bis 70 Gew.-% organische Polyisocyanatkomponente A),
15 bis 50 Gew.-% isocyanatreaktive Komponente B),
0,2 bis 4,0 Gew.-% eines Schaumstoffstabilisators C),
0,1 bis 1,0 Gew.-% an Katalysator D) und
10 bis 30 Gew.-% mindestens eines physikalischen Treibmittels mit einem Siedepunkt von weniger als 0 °C sowie gegebenenfalls Co-Treibmittel (Komponente E), und
0,0 bis 20,0 Gew.-% Hilfs- und Zusatzstoffe (Komponente F),
jeweils bezogen auf A) + B) + C) + D) + E) + F) = 100 Gew.-%.

7. Einkomponenten-Reaktionssystem gemäß einem der Ansprüche 1 bis 6, **dadurch gekennzeichnet, dass** die Isocyanat-Kennzahl 350 bis 550 beträgt.

8. Verfahren zur Herstellung eines Einkomponenten-Reaktionssystems durch Umsetzung der organischen Polyisocyanatkomponente
A) mit
B) einer isocyanatreaktiven Komponente, deren isocyanatreaktiven funktionellen Gruppen ausschließlich solche mit wenigstens einem Zerewitinoff-reaktiven Wasserstoffatom sind,
in Anwesenheit von
C) mindestens einem Schaumstabilisator,
D) mindestens einem Katalysator, der geeignet ist, die Reaktion des Semipräpolymers mit der Luftfeuchtigkeit zu katalysieren,
E) mindestens einem physikalischen Treibmittel mit einem Siedepunkt von weniger als 0 °C und gegebenenfalls Co-Treibmittel, sowie
F) gegebenenfalls Hilfs- und Zusatzstoffen.

9. Verfahren zur Herstellung eines Polyurethan-Hartschaumstoffs, erhältlich durch Vermischen und Umsetzen der Komponenten A) bis F) eines Einkomponenten-Reaktionssystems nach einem der Ansprüche 1 bis 7 unter Einwirkung von Feuchtigkeit.

10. Verfahren zur Herstellung eines Polyurethan-Hartschaumstoffs, umfassend die Schritte
a) Herstellung eines Einkomponenten-Reaktionssystems nach einem Verfahren gemäß Anspruch 8 und
b) Einwirken von Feuchtigkeit auf das in Schritt a) hergestellte Einkomponenten-Reaktionssystem.

11. Polyurethan-Hartschaumstoff, erhältlich nach einem Verfahren gemäß Anspruch 9 oder 10.

12. Verwendung eines Einkomponenten-Reaktionssystems nach einem der Ansprüche 1 bis 7 als 1-K Montageschaumstoff, wobei das Einkomponenten-Reaktionssystem in einen Druckbehälter eingefüllt ist.

13. Druckbehälter, insbesondere ein Einwegdruckbehälter, enthaltend ein Einkomponenten-Reaktionssystem nach einem der Ansprüche 1 bis 7.

14. Verwendung von Polyurethan-Hartschaumstoffen gemäß Anspruch 11 für Anwendungen in der Bauindustrie.
